# EUROPÄISCHE PATENTSCHRIFT

(11) **EP 1 506 604 B1**
(45) Veröffentlichungstag und Bekanntmachung des Hinweises auf die Patenterteilung: **25.05.2016**
(21) Anmeldenummer: 03742862.0
(22) Anmeldetag: 06.02.2003
(51) Int. Cl.: H02H 7/08

(54) **WECHSELRICHTER FÜR EINE ELEKTRISCHE MASCHINE**
INVERTER FOR AN ELECTRIC MACHINE
ONDULEUR POUR UNE MACHINE ELECTRIQUE

(30) Priorität: 11.05.2002 DE 10221081
(43) Veröffentlichungstag der Anmeldung: 16.02.2005
(73) Patentinhaber: ROBERT BOSCH GMBH, 70442 Stuttgart (DE)
(72) Erfinder: KUEHNER, Jochen, 71522 Backnang-Heiningen (DE); PLIKAT, Robert, 72800 Eningen (DE); RECHBERGER, Klaus, 71638 Ludwigsburg (DE); RUOPP, Jochen, 72666 Neckartailfingen (DE)
(86) Internationale Anmeldenummer: PCT/DE2003/000339
(87) Internationale Veröffentlichungsnummer: WO 2003/096507

(56) Entgegenhaltungen:
- EP-A- 0 596 472
- DE-A- 19 835 576

## Beschreibung

Die Erfindung geht aus von einem Wechselrichter für eine elektrische Maschine nach der Gattung des Hauptanspruchs und betrifft insbesondere Wechselrichter für Starter-Generatoren in Kraftfahrzeugen, die auch im batterielosen Betrieb bzw. bei defekter oder entladener Batterie funktionieren sollen.

### Stand der Technik

Es ist bekannt, Drehstrommaschinen mit Hilfe von Pulswechselrichtern zu betreiben. Dabei sind die Drehstrommaschinen über den Pulswechselrichter mit einer Batterie verbindbar. Der Pulswechselrichter umfasst Leistungsschalter, die üblicherweise als Brückenkonfiguration mit sechs selbstsperrenden Schaltern ausgeführt sind. Beispielsweise sind solche selbstsperrenden Leistungsschalter Leistungs-MOSFETs, es ist jedoch auch bekannt, andere Halbleiterschalter wie IGBTs oder thyristorartige Schalter, beispielsweise MCTs, ESTs, GTOs oder ähnliche einzusetzen. Auch Lösungen mit herkömmlichen Leistungsbipolartransistoren sind bekannt.

Alle diese Schalter können nur dann eingeschaltet werden, wenn die Spannung an der Steuerelektrode einen bestimmten positiven Wert gegenüber einer Referenzelektrode, beispielsweise der Source-Elektrode oder der Kathode überschreitet. Ohne Steuerspannung sperren die bei den bekannten Systemen eingesetzten Schalter. Die Ansteuerung der Schalter, also die Zuführung einer Spannung an die Steuerelektrode erfolgt üblicherweise mit Hilfe einer Steuereinrichtung, die beispielsweise Bestandteil eines Bordnetzsteuergerätes oder eines Spannungsreglers ist.

Handelt es sich bei der Drehstrommaschine um eine permanenterregte Synchronmaschine, muss im Fehlerfall gewährleistet werden, dass die Phasen der Maschine kurzgeschlossen oder niederohmig verbunden werden können, da andernfalls bei entsprechend hohen Drehzahlen der Synchronmaschine Überspannungen auftreten könnten. Es ist daher bekannt und wird beispielsweise in der DE 198 35 576 A1 beschrieben, dass bei einer Drehstrommaschine mit einem Pulswechselrichter, die als permanenterregte Synchronmaschine ausgestaltet ist, in speziellen Fällen abhängig vom Fehlerfall durch gezieltes Einschalten einzelner oder mehrere Leistungsschalter die Phasen der Maschine kurzgeschlossen werden und so Überspannungen vermieden werden.

Eine Ansteuerung der Leistungsschalter ist bei der bekannten Lösung jedoch nur dann möglich, wenn eine einwandfreie Funktion der Schalter, des Ansteuersystems und der Batterie gewährleistet ist. Sollen einzelne Schalter des Pulswechselrichters geschlossen werden und ist jedoch gleichzeitig die Versorgungsspannung ausgefallen, so ist eine Ansteuerung und damit das Einschalten der Schalter nicht mehr möglich.

Die Aufgabe der Erfindung besteht darin, bei einem System mit einer Drehstrommaschine mit einem zugeordneten Pulswechselrichter sicherzustellen, dass im Fehlerfall bei drohender Überspannung ein Kurzschließen oder eine niederohmige Verbindung vorgebbarer Leistungsschalter sicher möglich ist, unabhängig von ungünstigen Randbedingungen, wie beispielsweise einer fehlenden Batterie, einer defekten Batterie oder einer entladenen Batterie. Gelöst wird diese Aufgabe durch einen Wechselrichter mit den Merkmalen des Anspruchs 1.

### Vorteile der Erfindung

Der erfindungsgemäße Wechselrichter für eine elektrische Maschine mit den Merkmalen des Anspruchs 1 hat den Vorteil, dass im Fehlerfall vorgebbare Phasen der elektrischen Maschine kurzgeschlossen oder niederohmig verbunden werden, bzw. dass die betreffenden Schalter leitend sind, so dass möglicherweise auftretende Überspannungen bei sich drehender elektrischer Maschine verhindert werden. Erzielt werden diese Vorteile, indem vorgebbare Leistungsschalter des Pulswechselrichters, vorzugsweise die drei im Low-Side-Zweig geschalteten Leistungsschalter, so ausgewählt werden, dass sie ohne Steuerspannung leiten und mit anliegender Steuerspannung sperren. Solche selbstleitenden Leistungsschalter sind vorteilhafter Weise als Normally-On-MOSFETs ausgestaltet. Bei erkanntem Kurzschluß wird einfach die Steuerspannung an der betreffenden Steuerelektrode des Schalters abgeschaltet und dieser damit in leitenden Zustand versetzt.

Weitere Vorteile der Erfindung werden durch die in den Unteransprüchen angegebenen Maßnahmen erzielt. Dabei ist eine vorteilhafte Ausführungsform derart ausgestaltet, dass eine Parallelschaltung von mechanischen Ruhekontakten zu herkömmlichen Halbleiterschaltern eingesetzt wird. In vorteilhafter Weise werden dabei Relaiskontakte vorgesehen, die durch ein Einschaltsignal freigegeben werden können. In vorteilhafter Weise wird eine Kombination von gemischten und reinen Halbbrücken mit einer vorgebbaren Kombination von Normally-On-Schaltern und Normally-Off-Schaltern eingesetzt. Die Ansteuerung der Schalter erfolgt in vorteilhafter Weise mit Hilfe einer Steuereinrichtung, die jedoch solche Ansteuersignale abgibt, die die an sich geschlossenen Schalter zu vorgebbaren Zeiten öffnet.

Im Normalbetrieb können alle erfindungsgemäßen Wechselrichter wie herkömmliche Wechselrichter durch getaktete Ansteuerung betrieben werden, jedoch mit umgekehrter Ansteuerung der Steuerelektroden, also mit Steuerspannung für sperrende Zeitphasen und ohne Steuerspannung in leitenden Phasen.

### Zeichnung

Ausführungsbeispiele der Erfindung sind in der Zeichnung dargestellt und werden in der nachfolgenden Beschreibung näher erläutert. Im Einzelnen zeigt
- Figur 1: ein erstes Ausführungsbeispiel der Erfindung,
- Figur 2: ein Beispiel für einen Pulswechselrichter mit 6 MOSFETs und
- Figur 3: eine Ausgestaltung der Erfindung mit mehreren parallel geschalteten Halbbrücken.

### Beschreibung

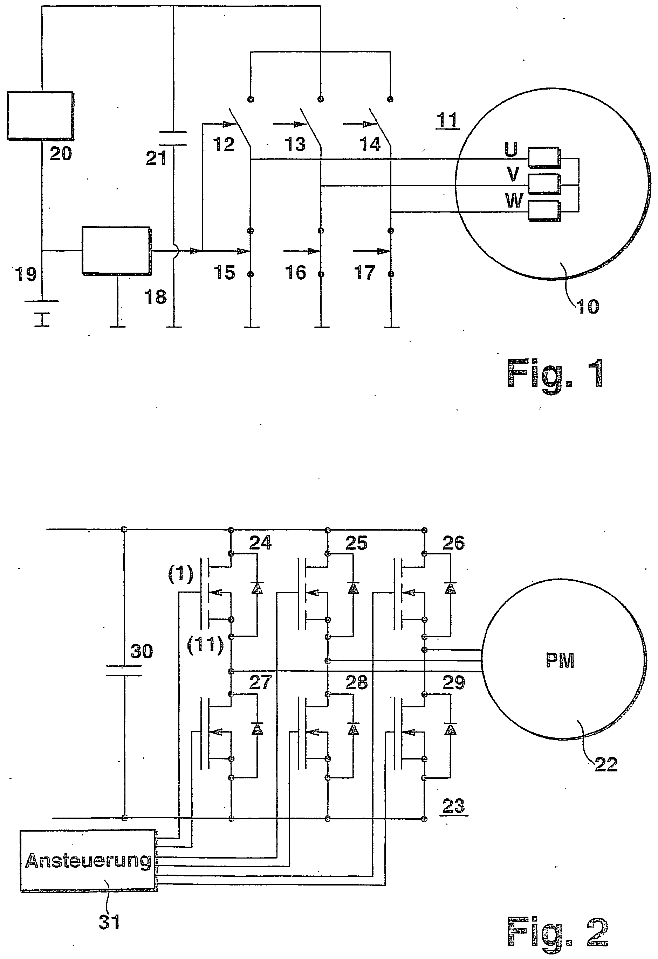

In Figur 1 ist schematisch eine Spannungsversorgungsschaltung für eine elektrische Maschine 10 dargestellt, bei der eine Gleichspannung über eine schaltbare Brücke bzw. einen Wechselrichter 11 der elektrischen Maschine 10 zugeführt wird. Der Wechselrichter 11 umfasst dabei drei High-Side-Schaltelemente 12, 13, 14 und drei Low-Side-Schaltelemente 15, 16, 17. Die High-Side-Schaltelemente 12, 13, 14 sind beispielsweise herkömmliche Feldeffekttransistoren, die nur dann leiten, wenn an ihrer Gate-Elektrode eine Steuerspannung anliegt, die einen bestimmten positiven Wert gegenüber einer Referenzelektrode (Source oder Drain) überschreitet. Der Wert der Steuerspannung ist dabei bauartbedingt. Die Low-Side-Schaltelemente 15, 16, 17 sind dagegen Schaltelemente, die ohne anliegende Steuerspannung in leitendem Zustand sind und nur bei Anliegen einer Steuerspannung in den sperrenden Zustand übergehen. Solche Schaltelemente sind beispielsweise Normally-On-Feldeffekttransistoren.

Die elektrische Maschine 10 ist in üblicher Weise mit dem Wechselrichter 11 verbunden. Die Wicklungen der elektrischen Maschine sind in der Figur mit U, V, W bezeichnet. Die Ansteuerung der Schaltelemente des Wechselrichters erfolgt mit Hilfe einer Steuerelektronik 18, die den jeweiligen Gate-Elektroden der Schaltelemente die für den optimalen Betrieb erforderlichen Steuerspannungen zuführt. Die Spannungsversorgung für die Steuerelektronik 18 erfolgt im Normalbetrieb aus der Batterie 19, gegebenenfalls über einen geeigneten Spannungswandler 20. Zur Glättung der Spannung bzw. zur Zwischenspeicherung von elektrischer Ladung dient ein Zwischenkreiskondensator 21

Im Normalbetrieb wird der in Figur 1 dargestellte Wechselrichter ebenso wie die in den folgenden Figuren dargestellten erfindungsgemäßen Wechselrichter wie ein herkömmliche Wechselrichter durch getaktete Ansteuerung betrieben, jedoch mit umgekehrter Ansteuerung der Steuerelektroden, also durch Zuführung einer Steuerspannung für sperrende Zeitphasen und durch Abschalten der Steuerspannung in leitenden Zeitphasen.

An Stelle der im Low-Side-Zweig eingesetzten Normally-On-Halbleiterschalter können in einer Ausgestaltung der Erfindung auch herkömmliche Feldeffekttransistoren eingesetzt werden, wobei diesen dann eine Parallelschaltung von mechanischen Ruhekontakten zugeordnet wird. Solche Relaiskontakte werden dann explizit durch ein Einschaltsignal freigegeben. Wesentlich ist bei allen Ausführungsformen, dass die im Low-Side-Zweig eingesetzten Bauelemente ohne Ansteuersignal jeweils leiten und somit einen Kurzschluss bewirken. Damit wird sichergestellt, dass bei drehender Maschine und ausgefallener Versorgungsspannung keine Überspannungen auftreten können.

In Figur 2 ist eine weitere Ausgestaltung der Erfindung dargestellt, die im Wesentlichen den bekannten Lösungen entspricht, jedoch im Unterschied zu den bekannten Lösungen im Low-Side-Zweig Normally-On-Schaltelemente aufweist, also Schaltelemente, die ohne anliegende Steuerspannung leiten. Im Ausführungsbeispiel ist dabei eine Realisierung des Wechselrichters mit selbstleitenden MOSFETs angegeben, die eine ähnliche Charakteristik aufweisen wie JFETs, SIT oder verschiedene SIC-Bauelemente. Auch beim Ausführungsbeispiel nach Figur 2 könnte eine Parallelschaltung von mechanischen Ruhekontakten zu Normally-off-Schaltern eingesetzt werden. Möglich wären beispielsweise Relaiskontakte, die explizit durch ein Einschaltsignal freigegeben werden können.

Im einzelnen ist in Figur 2 die elektrische Maschine, beispielsweise eine permanenterregte Synchronmaschine mit 22 bezeichnet. Der Wechselrichter 23 umfasst einen High-Side-Zweig und einen Low-Side-Zweig mit insgesamt sechs Schaltern 24 bis 29. Zur Ladungsspeicherung dient ein Zwischenkondensator 30. Die Ansteuerung der Halbleiterschalter erfolgt mit Hilfe einer Ansteuerelektronik 31. Während bei bekannten Systemen Halbleiterschalter eingesetzt werden, die nur dann eingeschaltet werden, wenn die Spannung an der Steuerelektrode 1, 11 einen bestimmten positiven Wert gegenüber einer Referenzelektrode (Source, Kathode) überschreitet, werden erfindungsgemäß Halbleiterschalter eingesetzt, die gerade dann, wenn die Spannung an der Steuerelektrode keinen bestimmten positiven Wert gegenüber der Referenzelektrode überschreitet, leiten. Damit ist auch bei diesem Ausführungsbeispiel sichergestellt, dass im Fehlerfall bzw. bei Überspannung auch bei fehlender oder defekter Batterie die Low-Side-Schalter leiten und die Phasen der elektrischen Maschine kurzschließen.

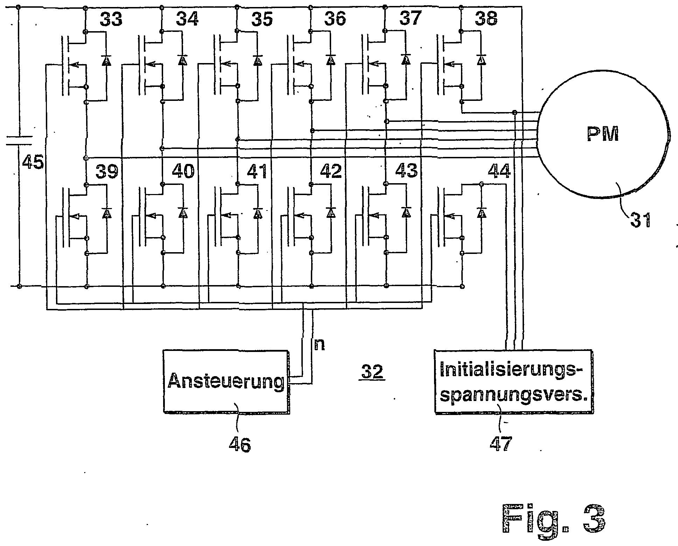

In Figur 3 ist eine weitere Ausführungsform der Erfindung dargestellt, die eine Kombination von gemischten und reinen Halbbrücken darstellt. Die permanenterregte Synchronmaschine ist in diesem Ausführungsbeispiel mit 31 bezeichnet. Der Wechselrichter 32 umfasst insgesamt 12 Schaltelemente 33 bis 44 sowie einen Zwischenkreiskondensator 45. Angesteuert werden die Schaltelemente 33 bis 44 mit Hilfe der Ansteuerung 46. Zusätzlich ist noch eine Initialisierungsspannungsversorgung 47 vorhanden. Damit ist die mehrphasige Ausführungsform so gestaltbar, dass der Hauptteil der Halbbrücken mit Normally-On-Schaltern im Low-Side-Zweig versehen wird und eine Halbbrücke mit einem herkömmlichen Normally-Off-Schalter versehen wird, so dass die hier erzeugte, begrenzte Spannung zum Abschalten der übrigen Halbbrücken verwendet werden kann. Diese Kombination ist auch für das Initialisieren und Hochfahren eines zentralen Steuergerätes einsetzbar.

## Patentansprüche

1. Wechselrichter (11) für eine elektrische Maschine (10), deren Phasenwicklungen (U,V,W) mit dem Wechselrichter (11) in elektrischer Verbindung stehen und der Wechselrichter (11) eine vorgebbare Anzahl von gesteuerten Schaltelementen (12-17) umfasst, die eine Brückenschaltung darstellen, mit einem High-Side-Zweig und einem Low-Side-Zweig, **dadurch gekennzeichnet, dass** wenigstens eines der Schaltelemente (15-17) des Low-Side-Zweiges so ausgestaltet ist, dass es ohne Anliegen einer Steuerspannung in leitendem Zustand ist

2. Wechselrichter nach Anspruch 1, **dadurch gekennzeichnet, dass** alle Schaltelemente (15-17) des Low-Side-Zweiges so ausgestaltet sind, dass sie ohne anliegende Steuerspannung leiten.

3. Wechselrichter nach Anspruch 1 oder 2, **dadurch gekennzeichnet, dass** die ohne Spannung leitenden Schaltelemente (15-17) Normally-On-Transistoren, insbesondere Feldeffekttransistoren sind.

4. Wechselrichter nach Anspruch 1 oder 2, **dadurch gekennzeichnet, dass** die ohne Ansteuerung leitenden Schaltelemente (15-17, 27-29) Relais sind, die an Stelle der Low-Side-Transistoren eingesetzt werden oder parallel zu diesen liegen.

5. Wechselrichter nach einem der vorhergehenden Ansprüche, **dadurch gekennzeichnet, dass** eine Vielzahl von Schaltelementen (33-44) in gemischter Brückenform vorhanden ist, insbesondere für eine n-phasige Ausführung, wobei wenigstens eine der Halbbrücken mit Normally-Off-Schaltelementen aufgebaut ist.

6. Wechselrichter nach einem der vorhergehenden Ansprüche, **dadurch gekennzeichnet, dass** die Ansteuerung der Schaltelemente (12-17,33-44) im Normalbetrieb mit Hilfe einer Steuerelektronik (18,31,46) erfolgt.

7. Wechselrichter nach einem der vorhergehenden Ansprüche, **dadurch gekennzeichnet, dass** zusätzlich eine Initialisierungsspannungsversorgung (47) vorhanden ist, die für das Initialisieren und/oder Hochfahren einer Steuereinrichtung verwendet wird.

## Claims

1. Inverter (11) for an electrical machine (10), the phase windings (U, V, W) of which are electrically connected to the inverter (11), and the inverter (11) comprises a predefineable number of controlled switching elements (12-17) which constitute a bridge circuit, having a high-side branch and a low-side branch, **characterized in that** at least one of the switching elements (15-17) of the low-side branch is configured such that it is in a conducting state without the presence of a control voltage.

2. Inverter according to Claim 1, **characterized in that** all of the switching elements (15-17) of the low-side branch are configured such that they conduct without a control voltage present.

3. Inverter according to Claim 1 or 2, **characterized in that** the switching elements (15-17) that conduct without voltage are normally on transistors, in particular field effect transistors.

4. Inverter according to Claim 1 or 2, **characterized in that** the switching elements (15-17, 27-29) that conduct without driving are relays that are used instead of the low-side transistors or are connected in parallel therewith.

5. Inverter according to any of the preceding claims, **characterized in that** a multiplicity of switching elements (33-44) in mixed bridge form are present, in particular for an n-phase embodiment, wherein at least one of the half-bridges is constructed with normally off switching elements.

6. Inverter according to any of the preceding claims, **characterized in that** the driving of the switching elements (12-17, 33-44) in normal operation is carried out with the aid of control electronics (18, 31, 46).

7. Inverter according to any of the preceding claims, **characterized in that** an initialization voltage supply (47) is additionally present, which is used for initialization and/or start-up of a control device.

## Revendications

1. Onduleur (11) pour une machine électrique (10), dont les enroulements de phase (U, V, W) sont en liaison électrique avec l'onduleur (11) et l'onduleur (11) comprend un nombre prédéfinissable d'éléments de commutation (12 à 17) commandés qui représentent un circuit en pont, avec une branche « High Side » et une branche « Low-Side », **caractérisé en ce qu'**au moins l'un des éléments de commutation (15 à 17) de la branche « Low-Side » est conçu de sorte à être à l'état conducteur, sans application d'une tension d'entrée.

2. Onduleur selon la revendication 1, **caractérisé en ce que** tous les éléments de commutation (15 à 17) de la branche « Low-Side » sont conçus de sorte à être conducteurs sans tension d'entrée appliquée.

3. Onduleur selon la revendication 1 ou la revendication 2, **caractérisé en ce que** les éléments de commutation (15 à 17) conducteurs sans tension sont des transistors « Normally-On », notamment des transistors à effet de champ.

4. Onduleur selon la revendication 1 ou la revendication 2, **caractérisé en ce que** les éléments de commutation (15 à 17, 27 à 29) conducteurs sans excitation sont des relais que l'on utilise à la place des transistors « Low-Side » ou qui se situent à la parallèle de ces derniers.

5. Onduleur selon l'une quelconque des revendications précédentes, **caractérisé en ce qu'**une pluralité d'éléments de commutation (33 à 44) en forme de ponts mixtes est présente, notamment pour une réalisation à n phases, au moins l'un des demi ponts étant constitué d'éléments de commutation « Normally-Off ».

6. Onduleur selon l'une quelconque des revendications précédentes, **caractérisé en ce qu'**en fonctionnement normal, l'excitation des éléments de commutation (12 à 17, 33 à 44) s'effectue à l'aide d'un système électronique de commande (18, 31, 46).

7. Onduleur selon l'une quelconque des revendications précédentes, **caractérisé en ce qu'**en supplément, une alimentation en tension d'initialisation (47) est présente, que l'on utilise pour l'initialisation et/ou pour un démarrage d'un dispositif de commande.
